# EUROPEAN PATENT SPECIFICATION

(11) **EP 2 487 880 B1**
(45) Date of publication and mention of the grant of the patent: **06.11.2013**
(21) Application number: 11154205.6
(22) Date of filing: 11.02.2011
(51) Int. Cl.: H04M 1/23

(54) **Electronic mobile device having a keypad assembly with a film overlay**
Elektronisches Mobilgerät mit einer Tastaturanordnung mit Overlayfolie
Appareil mobile électronique doté d'un ensemble formant clavier doté d'un film de recouvrement

(43) Date of publication of application: 15.08.2012
(73) Proprietor: BlackBerry Limited, Waterloo, ON N2L 3W8 (CA)
(72) Inventor: Markan, Patrick James, Rolling Meadows, IL 60008 (US); Kudrna, Paul John, Rolling Meadows, IL 60008 (US); Finney, Benjamin Michael, Rolling Meadows, IL 60008 (US)
(74) Representative: Hibbert, Juliet Jane Grace

(56) References cited:
- DE-C1- 19 934 707
- US-A- 5 546 457

## Description

### BACKGROUND OF THE DISCLOSURE

The present disclosure generally relates to electronic mobile devices, and more particularly to keyboards or keypads of electronic mobile devices.

In the design of electronic mobile devices, such as cellular phones and the like, there is an inclination to continuously improve aesthetic qualities. One manner for making such improvements involves designing smaller and/or thinner devices by using smaller and/or thinner components. Another manner for making aesthetic improvements includes using visually and/or tactilely pleasing component assemblies. One type of visually pleasing assembly is a "seamless" keypad or keyboard in which multiple keys and the surrounding frame appear to be integrally connected.

Such seamless keys, while aesthetically appealing, create a number of practical design difficulties. For example, if a deformable film defines the upper layer of a seamless keypad, the film typically needs to exceed a minimum thickness to avoid being punctured during use. The force needed to deflect such a film (to actuate one of the keys) is relatively high and cannot typically be comfortably and repeatedly applied by a device user. As such, the aesthetic appeal of a seamless film keypad is typically outweighed by the desire to provide easy-to-manipulate keys.

Some designs have attempted to reduce the actuation forces described above. In each case, however, the resulting keys are not truly seamless. For example, some film keypad overlays include slits or regions of a material that is more deformable than the film itself. These features significantly reduce the aesthetic appeal of the device. As another example, other keypads use a less flexible, but more durable, sheet made of metal, polymers, or the like to define multiple keys instead of a film overlay. The frame supports the keys in a cantilevered manner and, as such, the keys do not include a visible gap at one side. In order to permit the sheet to be deflected to actuate the keys, however, the remaining three sides are not connected to the frame. As a result, the aesthetic appeal of these keys is significantly less than that of seamless keys.

US Patent No. 5546457 describes a telephone having a plurality of key tops and a small number of light sources for illuminating the key tops with a thin construction. A switch panel formed of a transparent material is mounted on a case of the telephone. The switch panel has a plurality of holes through which the key tops of a key top sheet are respectively inserted. An opaque film is formed on an outer surface of the switch panel. A plurality of conductive contracts are formed on a lower surface of the key top sheet at positions corresponding to the respective key tops. A plurality of switch patterns are formed on a printed circuit board so as to respectively face the conductive contacts. With this construction, the switch panel functions as a light guiding board, thereby efficiently illuminating the plurality of key tops by means of the small number of light sources such as LEDs.

German patent no DE 19934707 (C1) describes a transparent plastic housing produced by the injection moulding of a plastic material into a mould which is further connected to a film in order to form a housing upper shell. The plastic housing comprises a first area used as a display window and a second area comprising at least one recess with means for transmitting the pressure applied on a key. The film covers at least the second area, is transparent mainly in the first area and, when above the recess, forms a key that is mainly characterised by a symbol printed on the film. The key transmits the pressure applied thereon through the means provided therefor.

### BRIEF DESCRIPTION OF THE DRAWINGS

Fig. 1 is a perspective view of an electronic mobile device including a keypad assembly according to the present disclosure;

Fig. 2 is a front view of the electronic mobile device of Fig. 1;

Fig. 3 is a detail view of a portion of the keypad assembly enclosed by line 3-3 of Fig. 2;

Fig. 4 is a section view of the electronic mobile device along line 4-4 of Fig. 1;

Fig. 5 is a detail view of a portion of the keypad assembly enclosed by line 5-5 of Fig. 4;

Fig. 6 is a perspective view of an alternative embodiment of an electronic mobile device including a keypad assembly according to the present disclosure; and

Fig. 7 is a section view of the electronic mobile device along line 7-7 of Fig. 6.

### DETAILED DESCRIPTION

According to some embodiments, an electronic mobile device includes a base and a plurality of switches supported by the base. A flexible frame overlies the plurality of switches and includes a plurality of deflection supports disposed apart from the base. The deflection supports define a plurality of passageways through the flexible frame. A plurality of actuators is disposed adjacent the plurality of switches. Each of the plurality of actuators is received in a corresponding one of the plurality of passageways and is engageable with a corresponding one of the plurality of switches. A film layer overlies the flexible frame and includes a plurality of deflectable portions. Each of the plurality of deflectable portions overlies a corresponding one of the plurality of actuators and the corresponding one of the plurality of switches. The device further includes a plurality of keys. Each of the plurality of keys is defined by a corresponding one of the plurality of deflectable portions, the corresponding one of the plurality of actuators, and the corresponding one of the plurality of switches. Each of the plurality of keys is actuatable by deflecting the corresponding one of the plurality of deflectable portions and the flexible frame to displace the corresponding one of the actuators and thereby actuate the corresponding one of the plurality of switches.

The teachings of the present disclosure relate generally to portable electronic devices, e.g., mobile communication devices such as pagers, cellular phones, global positioning system (GPS) navigation devices and other satellite navigation devices, smart phones, wireless organizers, wireless personal digital assistants (PDA), and tablet computers. The portable electronic devices could be devices without wireless communication capabilities such as PDAs, electronic gaming devices, digital photograph albums or picture frames, digital cameras, or digital video recorders. These examples are intended to be non-limiting. It is also possible that the teachings of the present disclosure could be applied to electronic devices other than handheld electronic devices, e.g., notebook computers.

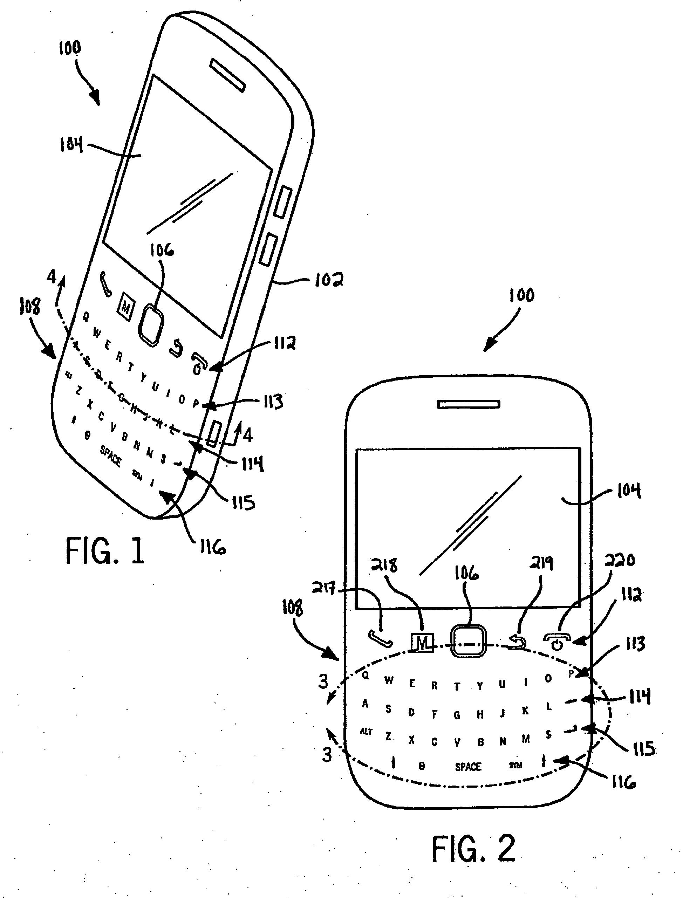

Referring to Figs. 1-5, an electronic mobile device 100 according to the present disclosure generally includes a base or housing 102 that houses various electronic components that control operation of the device, such as a microprocessor (not shown). The base 102 also houses a display module 104 that displays information to a device user. In some embodiments, the display module 104 is a liquid crystal display (LCD) module. Alternatively, the display module 104 may be another type of display device, such as an organic light emitting diode (OLED) module, a plasma display panel (PDP) module, or the like.

On the front surface, the base 102 also supports a plurality of input components. In particular, the base 102 supports an input control (e.g., an optical trackpad 106 or the like) and a generally seamless keypad or keyboard 108. Both the input control 106 and the keypad 108 are manipulable by the device user to provide inputs to the device 100 (e.g., to enter text characters, place phone calls, send text messages, use device applications, and the like). The following paragraphs describe more specifically the structure of the keypad 108 that provides its generally seamless appearance while being manipulable with relatively low actuation forces.

Referring now to Figs. 1-3, the keypad 108 includes a plurality of keys that appear, from the outside of the device 100, to be integrally connected to one another and other adjacent components. In the embodiment shown in the figures, the keypad 108 includes a set of keys that defines a full keyboard layout in addition to several menu keys. In particular, the plurality of keys includes five rows 112-116 of keys.

A first or upper row 112 of the keypad 108 includes four menu keys 217-220 (Fig. 2) that are actuatable to perform various tasks, although the keyboard may include more or less menu keys. For example, the first menu key 217 is actuatable, e.g., to place a voice call or display "recent calls" information. The second key 218 is actuatable, e.g., to display an application menu. The third key 219 serves as, e.g., a "back" or "escape" key. The fourth key 220 is actuatable, e.g., to end a voice call or serve as an on/off button for the electronic mobile device 100. In addition to the menu keys 217-220, the trackpad 106 is disposed in the upper row 112 between the second menu key 218 and the third menu key 219, although it is appreciated that the trackpad 106 is not limited to this location.

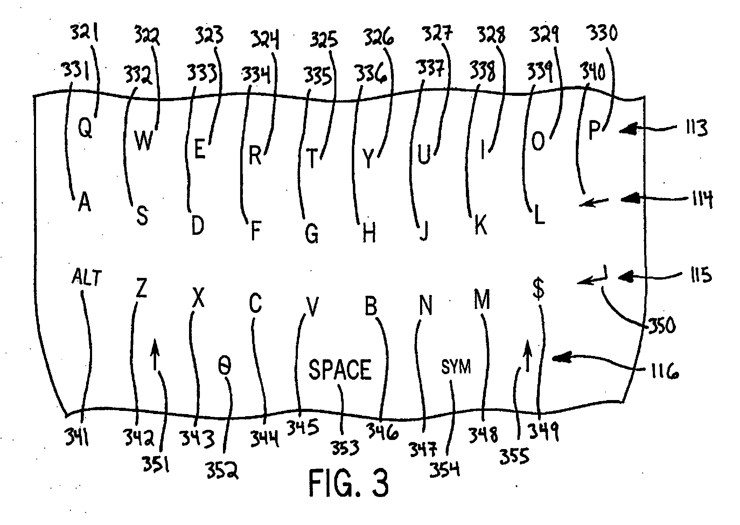

A second row 113 of the keypad 108 includes keys 321-330 (Fig. 3) that define a full row of a keyboard layout and are actuatable to input text characters to the electronic mobile device 100. In the embodiment shown in the figures, the keys 321-330 define the top alphabetical row of a QWERTY-type keyboard layout. Alternatively, the keys 321-330 could define a row of another well-known layout, such as a DVORAK-type layout, an alphabetic-type layout, a QWERTZ-type layout, an AZERTY-type layout, or the like. In any case, the keys 321-330 could additionally be used to input different text characters (i.e., letters, numbers, symbols, and the like) after entering an "alternate" or a "symbol" input mode.

A third or middle row 114 of the keypad 108 includes keys 331-340 that define a full row of the keyboard layout and are actuatable to input text characters and the like to the electronic mobile device 100. In the embodiment shown in the figures, the keys 331-340 define the middle alphabetical row of a QWERTY-type keyboard layout in addition to a backspace key 340. Alternatively, the keys 331-340 could define a row of another well-known layout, such as a DVORAK-type layout, an alphabetic-type layout, a QWERTZ-type layout, an AZERTY-type layout, or the like and the key 340 could perform a different function or input a text character to the device 100. In any case, the keys 331-340 could additionally be used to input different text characters after entering an alternate or a symbol input mode.

A fourth row 115 of the keypad 108 includes keys 341-350 that define a full row of the keyboard layout and are actuatable to input text characters and the like to the electronic mobile device 100. In the embodiment shown in the figures, the keys 341-350 define the lower alphabetical row of a QWERTY-type keyboard layout in addition to an "alt" (*i.e*., alternate input mode) key 341, a currency symbol key 349, and an enter key 350. Alternatively, the keys 341-350 could define a row of another well-known layout, such as a DVORAK-type layout, an alphabetic-type layout, a QWERTZ-type layout, an AZERTY-type layout, or the like and the keys 341, 349, and 350 could perform different functions or enter text characters to the device 100. In any case, the keys 341-350 could additionally be used to input different text characters after entering an alternate or a symbol input mode.

A fifth or lower row 116 of the keypad 108 includes five keys 351-355 that are actuatable to provide inputs to the device 100. In the embodiment shown in the figures, the fifth row includes shift keys 351 and 355, a zero key 352, a space key 353, and a "sym" (*i.e*., symbol input mode) key 354. Alternatively, the keys 351-355 could perform different functions or enter different text characters to the device 100.

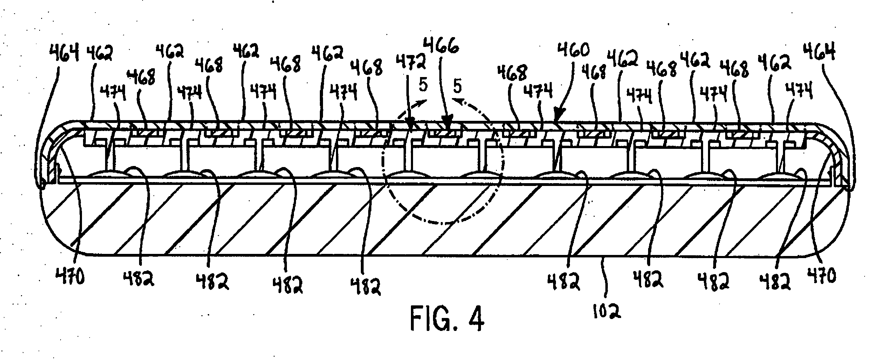

Referring now to Figs. 3-5, each of the plurality of keys 217-220 and 321-355 is defined by a set of components that will now be described in further detail. An outermost surface of the keys 217-220 and 321-355 is defined by a film sheet or layer 460 (Fig. 4) that includes a plurality of deflectable portions 462. Each of the deflectable portions 462 defines, in part, a corresponding key 217-220 or 321-355 and, as such, a deflectable portion 462 may be deflected toward the base 102 to actuate the corresponding key 217-220 or 321-355.

To permit the deflectable portions 462 to be movable toward the base 102, the film layer 460 comprises a deformable polymer such as polycarbonate (PC) or polyethylene terephthalate (PET) having a thickness of 0.2-0.4 mm. In some embodiments, such a film layer 460 is processed using in-mold labeling ("IML") techniques to provide invariant indicia on each of the deflectable portions 462. Such indicia illustrates the text character input to the device 100 or a functional character representing the action performed by actuating the corresponding key 217-220 or 321-355. For example, the first menu key 217 includes a telephone-shaped functional character representing the "place call" function of the key 217.

Alternatively, other deformable materials, appropriate film thicknesses, and manufacturing processes may be employed to provide the film layer 460 and the invariant indicia formed thereon.

In any case and as used herein, the term "invariant", when used to describe indicia, means that the text/functional character of a key does not change to other text/functional characters. However, the function performed by pressing such a key may vary depending on the operating mode of the electronic mobile device 100 (e.g., if placing a phone call, sending a text message, playing a game, etc.). Furthermore, invariant indicia may be transparent or translucent and may be illuminated by internal device components depending on the operating mode of the electronic mobile device 100 (e.g., upon sensing low-light conditions).

To facilitate an aesthetically appealing outermost surface of the device 100, the film layer 460 is generally continuous. As used herein, the term "continuous", when used to describe the film layer 460, means that the film layer 460 lacks substantial changes in thickness, slits, breaks, or other discontinuities apart from edges at the sides of the film layer 460 (e.g., edges 464 proximate the sides of the electronic mobile device 100) and edges surrounding the trackpad 106. In the embodiments shown in the figures, the edges 464 of the film layer 460 are insert molded to an adjacent component, described below, so as to fix the edges 464 relative to the base 102. In other embodiments, the edges 464 are fastened or otherwise fixed relative to the base 102.

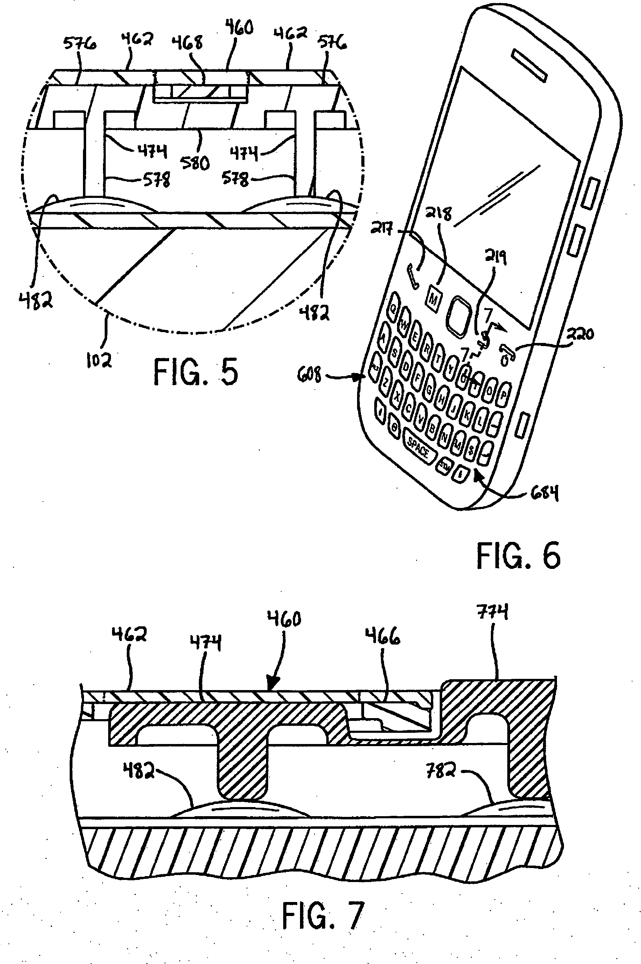

Referring now to Figs. 4 and 5, the continuous film layer 460 overlays and is supported by a keypad frame 466 (Fig. 4). The frame 466 includes a plurality of upper or deflection supports 468 disposed proximate and between adjacent deflectable portions 462 of the film layer 460. Together, the deflection supports 468 provide an underlying support structure for the film layer 460 apart from the edges 464. The deflection supports 468 also define a plurality of passageways or openings in the frame 466 therebetween. The passageways will be described in further detail below.

The deflection supports 468 proximate the sides of the electronic mobile device 100 integrally connect to a plurality of base supports 470 that engage the base 102. In the embodiments shown in the figures, the base supports 470 connect to the base 102 via snap connectors or hooks. Regardless of the specific manner in which the base supports 470 connect to the base 102, the base supports 470 "simply" support the deflection supports 468 apart from the base 102. That is, the frame 466 engages the base 102 at the edges of the frame 466 (e.g., at two edges of the frame 466 as shown in the figures), but not therebetween. This type of support permits the deflection supports 468 to move towards the base 102 when the device user presses one of the keys 217-220 and 321-355. This motion of the deflection supports 468 in turn provides low actuation forces compared to those provided by a relatively rigid frame 466.

To further facilitate flexibility of the frame 466, the component comprises a relatively flexible polymer such as PC or acrylonitrile butadiene styrene (ABS). Moreover and as described briefly above, such a flexible polymer may be connected to the film layer 460 using insert molding techniques.

Still referring to Figs. 4 and 5, the continuous film layer 460 also overlays and is supported by an actuator sheet 472 that integrally connects a plurality of actuators 474 (Fig. 4). Each actuator 474 further defines one of the keys 217-220 and 321-355. That is, each actuator includes an upper platform 576 (Fig. 5) that engages and is disposed below a corresponding deflectable portion 462 of the film layer 460. Each upper platform 576 is also received in a corresponding passageway extending through the flexible frame 466.

Each upper platform 576 connects to a generally narrow lower leg 578 that extends toward the base 102. In the embodiment shown in the figures, the upper platforms 576 integrally connect to the lower leg 578 extending therefrom to provide relatively tall column-like actuators 474. The upper platforms 576 and lower legs 578 also comprise a semi-rigid polymer, such as PC, to inhibit the actuators 474 from compressing when the device user actuates the keys 217-220 and 321-355.

To provide stability within the keypad 108, the actuator sheet 472 includes a plurality of connecting members 580 (Fig. 5) that integrally join adjacent upper platforms 576. The connecting members 580 are generally thin and/or include slits (not shown) to provide flexibility between adjacent actuators 474. As such, pressing one of the deflectable portions 462 of the film layer 460 displaces the corresponding actuator 474 without displacing the other actuators 474.

Still referring to Figs. 4 and 5, the actuators 474 overlay a plurality of switches 482 that further define the keys 217-220 and 321-355. In some embodiments, the switches 482 are dome switches, such as round or oblong metal domes, generally 4 or 5 mm in diameter. The switches 482 may alternatively be any other type that provides tactile feedback to the user when actuated. Regardless of the specific type that is used, each switch 482 is actuatable by the overlying and corresponding actuator 474 and deflectable portion 462 of the film layer 460. As such, each key 217-220 and 321-355 is actuatable by deflecting the corresponding deflectable portion 462 and flexible frame 466 to displace the corresponding actuator 474 and thereby actuate the corresponding switch 482.

The electronic mobile device 100 described above may be modified in other manners without departing from the scope of the disclosure. Referring now to Figs. 6 and 7, in some embodiments the continuous keypad structure only comprises some of the keys described above. In particular, the keypad 608 includes menu keys 217-220 that are each defined by a deflectable portion 462 of the film layer 460, a corresponding actuator 474, and a corresponding switch 482. As described above, each menu key 217-220 is actuatable by deflecting the corresponding deflectable portion 462 and flexible frame 466 to displace the corresponding actuator 474 and thereby actuate the corresponding switch 482. Unlike the embodiment described above, the keypad 608 also includes another plurality of keys 684 (e.g., a QWERTY-type keyboard layout) that is not defined by the film layer 460. Instead, each of the keys 684 is defined by an actuator 774 (Fig. 7) and a corresponding switch 782. As shown most clearly in Fig. 7, the actuators 774 extend above the film layer 460. Each of the keys 684 is actuatable by displacing the corresponding actuator 774 and thereby actuating the corresponding switch 782.

As another exemplary alternative, the film layer- 460 could include a transparent portion (not shown) that overlays the optical trackpad 106. Similarly, the film layer 460 could additionally or alternatively include a larger transparent portion (not shown) that overlays the display module 104 and a surrounding bezel. As yet another exemplary alternative, the actuators 474 may be separately supported (i.e., not integrally connected by the connecting members 580). As yet another exemplary alternative, each of the deflectable portions 462 may display variant indicia using a technology such as e-ink or the like.

In any case, from the above it should be apparent that the present disclosure provides an electronic mobile device having a keypad with at least some seamless keys that are manipulable with relatively low actuation forces. Such keys provide aesthetic appeal and may be comfortably and repeatedly actuated by the device user.

The various embodiments presented above are merely examples and are in no way meant to limit the scope of this disclosure. Variations of the embodiments described herein will be apparent to persons of ordinary skill in the art, such variations being within the intended scope of the present application. In particular, features from one or more of the above-described embodiments may be selected to create alternative embodiments comprised of a sub-combination of features which may not be explicitly described above. In addition, features from one or more of the above-described embodiments may be selected and combined to create alternative embodiments comprised of a combination of features which may not be explicitly described above. Features suitable for such combinations and subcombinations would be readily apparent to persons skilled in the art upon review of the present application as a whole. The subject matter described herein and in the recited claims intends to cover and embrace all suitable changes in technology.

## Claims

1. An electronic mobile device (100), comprising:
a base (102);
a plurality of switches (482) supported by the base (102);
a flexible frame (466) overlying the plurality of switches (482) and including a plurality of deflection supports (468) disposed apart from the base (102) that define a plurality of passageways through the flexible frame (466);
a plurality of actuators (474) disposed adjacent the plurality of switches (482), each of the plurality of actuators (474) being received in a corresponding one of the plurality of passageways and being engageable with a corresponding one of the plurality of switches (482);
a film layer (460) overlying the flexible frame (466) and including a plurality of deflectable portions (462), each of the plurality of deflectable portions (462) overlying a corresponding one of the plurality of actuators (474) and the corresponding one of the plurality of switches (482); and
a plurality of keys (217-220, 321-355), each of the plurality of keys (217-220, 321-355) being defined by a corresponding one of the plurality of deflectable portions (462), the corresponding one of the plurality of actuators (474), and the corresponding one of the plurality of switches (482) such that each of the plurality of keys (217-220, 321-355) is actuatable by deflecting the corresponding one of the plurality of deflectable portions (462) and the flexible frame (466) to displace the corresponding one of the actuators (474) and thereby actuate the corresponding one of the plurality of switches (482).

2. The electronic mobile device (100) of claim 1, wherein the film layer (460) includes a plurality of edges (464), and each of the plurality of edges (464) is fixed relative to the base (102).

3. The electronic mobile device (100) of claim 1, wherein the flexible frame (466) further includes a plurality of base supports (470) extending from the plurality of the deflection supports (468) at edges (464) of the flexible frame (466), and the plurality of base supports (470) engages the base (102) such that the flexible frame (466) is simply supported by the base (102).

4. The electronic mobile device (100) of claim 1, wherein the film layer (460) defines an outermost surface of the electronic mobile device (100).

5. The electronic mobile device (100) of claim 1, further comprising an actuator sheet (472) integrally connecting the plurality of actuators (474).

6. The electronic mobile device (100) of claim 5, wherein each of the plurality of actuators (474) includes:
an upper platform (576) engageable with the corresponding one of the plurality of deflectable portions (462); and
a lower leg (578) extending from the upper platform (576) and engageable with the corresponding one of the plurality of switches (482).

7. The electronic mobile device (100) of claim 6, wherein the actuator sheet (472) further includes a plurality of connecting members (580), each of the plurality of connecting members (580) integrally joining adjacent upper platforms (576).

8. The electronic mobile device (100) of claim 1, wherein the plurality of keys (217-220, 321-355) includes at least four rows of keys (113-116) each having at least five keys.

9. The electronic mobile device (100) of claim 1, wherein the plurality of keys (217-220, 321-355) includes at least three rows of keys (113-115) each defining a full row of keys.

10. The electronic mobile device (100) of claim 9, wherein the plurality of keys (217-220, 321-355) further includes at least another row (116) having five keys.

11. The electronic mobile device (100) of claim 1, further comprising an optical trackpad (106) supported by the base (102) and disposed between two keys (218, 219) of the plurality of keys (217-220, 321-355).

12. The electronic mobile device (100) of claim 1, further comprising another plurality of keys (684) disposed apart from the film layer (460).

13. The electronic mobile device (100) of claim 12, wherein each of the another plurality of keys (684) is defined by a corresponding switch (782) and a corresponding actuator (774) engageable with the corresponding switch (782) such that each of the another plurality of keys (684) is actuatable by displacing the corresponding actuator (774) and thereby actuating the corresponding switch (782).

## Patentansprüche

1. Eine elektronische mobile Vorrichtung (100), die aufweist:
eine Basis (102);
eine Vielzahl von Schaltern (482), die von der Basis (102) getragen werden;
einen flexiblen Rahmen (466), der über der Vielzahl von Schaltern (482) liegt und eine Vielzahl von Auslenkungs-Unterstützungen (468), die entfernt von der Basis (102) angeordnet sind, die eine Vielzahl von Durchlässen durch den flexiblen Rahmen (466) definieren;
eine Vielzahl von Aktuatoren (474), die angrenzend an die Vielzahl von Schaltern (482) angeordnet sind, wobei jeder der Vielzahl von Aktuatoren (474) in einem entsprechenden der Vielzahl von Durchlässen aufgenommen ist und mit einem entsprechenden der Vielzahl von Schaltern (482) in Kontakt gebracht werden kann;
eine Filmschicht (460), die über dem flexiblen Rahmen (466) liegt und eine Vielzahl von auslenkbaren Teilen (462) umfasst, wobei jeder der Vielzahl von auslenkbaren Teilen (462) über einem entsprechenden der Vielzahl von Aktuatoren (474) und dem entsprechenden der Vielzahl von Schaltern (482) liegt; und
eine Vielzahl von Tasten (217-220, 321-355), wobei jede der Vielzahl von Tasten (217-220, 321-355) durch einen entsprechenden der Vielzahl von auslenkbaren Teilen (462), dem entsprechenden der Vielzahl von Aktuatoren (474) und dem entsprechenden der Vielzahl von Schaltern (482) definiert ist derart, dass jede der Vielzahl von Tasten (217-220, 321-355) betätigbar ist durch Auslenken des entsprechenden der Vielzahl von auslenkbaren Teilen (462) und des flexiblen Rahmens (466), um den entsprechenden der Aktuatoren (474) zu versetzten und dadurch den entsprechenden der Vielzahl von Schaltern (482) zu betätigen.

2. Die elektronische mobile Vorrichtung (100) gemäß Anspruch 1, wobei die Filmschicht (460) eine Vielzahl von Kanten (464) umfasst und wobei jede der Vielzahl von Kanten (464) relativ zu der Basis (102) fest ist.

3. Die elektronische mobile Vorrichtung (100) gemäß Anspruch 1, wobei der flexible Rahmen (466) weiter eine Vielzahl von Basis-Unterstützungen (470) umfasst, die sich von der Vielzahl der Auslenkungs-Unterstützungen (468) an Kanten (464) des flexiblen Rahmens (466) erstrecken, und wobei die Vielzahl von Basis-Unterstützungen (470) die Basis (102) kontaktiert derart, dass der flexible Rahmen (466) einfach durch die Basis (102) unterstützt wird.

4. Die elektronische mobile Vorrichtung (100) gemäß Anspruch 1, wobei die Filmschicht (460) eine äußerste Oberfläche der elektronischen mobilen Vorrichtung (100) definiert.

5. Die elektronische mobile Vorrichtung (100) gemäß Anspruch 1, die weiter eine Aktuatorplatte (472) aufweist, die die Vielzahl von Aktuatoren (474) integral verbindet.

6. Die elektronische mobile Vorrichtung (100) gemäß Anspruch 5, wobei jeder der Vielzahl von Aktuatoren (474) umfasst:
eine obere Plattform (576), die mit dem entsprechenden der Vielzahl von auslenkbaren Teilen (462) in Kontakt gebracht werden kann; und
einen unteren Schenkel (578), der sich von der oberen Plattform (576) erstreckt und mit dem entsprechenden der Vielzahl von Schaltern (482) in Kontakt gebracht werden kann.

7. Die elektronische mobile Vorrichtung (100) gemäß Anspruch 6, wobei die Aktuatorplatte (472) weiter eine Vielzahl von Verbindungselementen (580) umfasst, wobei jedes der Vielzahl von Verbindungselementen (580) angrenzende obere Plattformen (576) integral verbindet.

8. Die elektronische mobile Vorrichtung (100) gemäß Anspruch 1, wobei die Vielzahl von Tasten (217-220, 321-355) zumindest vier Reihen von Tasten (113-116) umfasst, die jeweils zumindest fünf Tasten haben.

9. Die elektronische mobile Vorrichtung (100) gemäß Anspruch 1, wobei die Vielzahl von Tasten (217-220, 321-355) zumindest drei Reihen von Tasten (113-115) umfassen, die jeweils eine volle Reihe von Tasten definieren.

10. Die elektronische mobile Vorrichtung (100) gemäß Anspruch 9, wobei die Vielzahl von Tasten (217-220, 321-355) weiter zumindest eine weitere Reihe (116) mit fünf Tasten umfassen.

11. Die elektronische mobile Vorrichtung (100) gemäß Anspruch 1, die weiter ein optisches Trackpad (106) aufweist, das von der Basis (102) getragen wird und zwischen zwei Tasten (218, 219) der Vielzahl von Tasten (217-220, 321-355) angeordnet ist.

12. Die elektronische mobile Vorrichtung (100) gemäß Anspruch 1, die weiter eine weitere Vielzahl von Tasten (684) aufweist, die entfernt von der Filmschicht (460) angeordnet sind.

13. Die elektronische mobile Vorrichtung (100) gemäß Anspruch 12, wobei jede der anderen Vielzahl von Tasten (684) durch einen entsprechenden Schalter (782) und einen entsprechenden Aktuator (774) definiert ist, der mit dem entsprechenden Schalter (782) in Kontakt gebracht werden kann derart, dass jede der anderen Vielzahl von Tasten (684) betätigbar ist durch Versetzen des entsprechenden Aktuators (774) und dadurch Betätigen des entsprechenden Schalters (782).

## Revendications

1. Dispositif électronique mobile (100) comprenant :
une base (102) ;
une pluralité de commutateurs (482) supportés par la base (102) ;
un cadre souple (466) superposé à la pluralité de commutateurs (482) et comportant une pluralité de supports de déviation (468) disposés de manière écartée de la base (102) et définissant une pluralité de passages à travers le cadre souple (466) ;
une pluralité d'actionneurs (474) disposés de façon adjacente à la pluralité de commutateurs (482), chacun de la pluralité d'actionneurs (474) étant reçu dans l'un, correspondant, de la pluralité de passages et pouvant s'engager sur l'un, correspondant, de la pluralité de commutateurs (482) ;
une couche de film (460) superposée au cadre souple (466) et comportant une pluralité de parties pouvant être déviées (462), chacune de la pluralité de parties pouvant être déviées (462) étant superposée à l'un, correspondant, de la pluralité d'actionneurs (474) et au commutateur correspondant de la pluralité de commutateurs (482) ; et
une pluralité de touches (217-220, 321-355), chacune de la pluralité de touches (217-220, 321-355) étant définie par l'une, correspondante, de la pluralité de parties pouvant être déviées (462), l'actionneur correspondant de la pluralité d'actionneurs (474) et le commutateur correspondant de la pluralité de commutateurs (482) de façon que chacune de la pluralité de touches (217-220, 321-355) puisse être actionnée par déviation de la partie correspondante de la pluralité de parties pouvant être déviées (462) et le cadre souple (466) afin de déplacer l'actionneur correspondant des actionneurs (474) et d'actionner ainsi le commutateurs correspond de la pluralité de commutateurs (482).

2. Dispositif électronique mobile (100) selon la revendication 1, dans lequel la couche de film (460) comporte une pluralité de bords (464), et chacun de la pluralité de bords (464) est fixe par rapport à la base (102).

3. Dispositif électronique mobile (100) selon la revendication 1, dans lequel le cadre souple (466) comporte en outre une pluralité de supports de base (470) s'étendant depuis la pluralité de supports de déviation (468) sur des bords (464) du cadre souple (466), et la pluralité de supports de base (470) s'engage sur la base (102) de façon que le cadre souple (466) soit simplement supporté par la base (102).

4. Dispositif électronique mobile (100) selon la revendication 1, dans lequel la couche de film (460) définit une surface la plus extérieure du dispositif électronique mobile (100).

5. Dispositif électronique mobile (100) selon la revendication 1, comprenant en outre une feuille d'actionneur (472) reliant de façon solidaire la pluralité d'actionneurs (474).

6. Dispositif électronique mobile (100) selon la revendication 5, dans lequel chacun de la pluralité d'actionneurs (474) comporte :
une plateforme supérieure (576) pouvant s'engager sur la partie correspondante de la pluralité de parties pouvant être déviées (462) ; et
une patte inférieure (578) se prolongeant depuis la plateforme supérieure (576) et pouvant s'engager sur le commutateur correspondant de la pluralité de commutateurs (482).

7. Dispositif électronique mobile (100) selon la revendication 6, dans lequel la feuille d'actionneur (472) comporte en outre une pluralité d'éléments de liaison (580), chacun de la pluralité d'éléments de liaison (580) joignant de façon solidaire des plateformes supérieures adjacentes (576).

8. Dispositif électronique mobile (100) selon la revendication 1, dans lequel la pluralité de touches (217-220, 321-355) comporte au moins quatre rangées de touches (113-116) comportant chacune au moins cinq touches.

9. Dispositif électronique mobile (100) selon la revendication 1, dans lequel la pluralité de touches (217-220, 321-355) comporte au moins trois rangées de touches (113-115) définissant chacune une rangée complète de touches.

10. Dispositif électronique mobile (100) selon la revendication 9, dans lequel la pluralité de touches (217-220, 321-355) comporte en outre au moins une autre rangée (116) comportant cinq touches.

11. Dispositif électronique mobile (100) selon la revendication 1, comprenant en outre un pavé tactile (106) supporté par la base (102) et disposé entre deux touches (218, 219) de la pluralité de touches (217-220, 321-355).

12. Dispositif électronique mobile (100) selon la revendication 1, comprenant en outre une autre pluralité de touches (684) disposées de façon espacée de la couche de film (460).

13. Dispositif électronique mobile (100) selon la revendication 12, dans lequel chacune de ladite autre pluralité de touches (684) est définie par un commutateur correspondant (782) et un actionneur correspondant (774) pouvant s'engager sur le commutateur correspondant (782) de façon que chacune de ladite autre pluralité de touches (684) puisse être actionnée par déplacement de l'actionneur correspondant (774) et ainsi actionner le commutateur correspondant (782).
